# EUROPEAN PATENT APPLICATION

(11) **EP 4 753 030 A1**
(43) Date of publication of application: **03.06.2026**
(21) Application number: 25212352.6
(22) Date of filing: 30.10.2025
(51) Int. Cl.: H01M 50/103, H01M 50/176, H01M 50/566, H01M 50/593

(54) **POWER STORAGE DEVICE AND METHOD OF MANUFACTURING SAME**

(30) Priority: 27.11.2024 JP 2024206071
(71) Applicant: Prime Planet Energy & Solutions, Inc., Tokyo 103-0022 (JP)
(72) Inventor: TAKAMATSU, Hiroshi, Tokyo, 103-0022 (JP); MOTOJIMA, Yasuhisa, Tokyo, 103-0022 (JP)
(74) Representative: Kuhnen & Wacker Patent- und Rechtsanwaltsbüro PartG mbB

(57) **Abstract**

In a power storage device, a welding portion (800) at which a first conductive member (420) and a second conductive member (440) are welded is formed, an outer peripheral edge of a base portion (470A) includes a first portion (471) located in a vicinity of the welding portion (800) and a second portion (472) other than the first portion (471), and the outer peripheral wall is not formed in the first portion (471), or a maximum value of a height of the outer peripheral wall in the first portion (471) is lower than a maximum value of a height of an outer peripheral wall (472A, 473B) in the second portion (472).

## Description

### CROSS REFERENCE TO RELATED APPLICATIONS

This nonprovisional application is based on Japanese Patent Application No. 2024-206071 filed on November 27, 2024 with the Japan Patent Office, the entire contents of which are hereby incorporated by reference.

### BACKGROUND OF THE INVENTION

### Field of the Invention

The present technology relates to a power storage device and a method of manufacturing the power storage device.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

### SUMMARY OF THE INVENTION

In a power storage device, an insulating member for securing electrical insulation at a predetermined position is provided. It is required to improve reliability of securing the insulation property by the insulating member. From this viewpoint, the battery described in Japanese Patent No. 4537353 still has room for improvement.

An object of the present technology is to provide a power storage device having high reliability and a method of manufacturing the power storage device.

The present technology provides the following power storage device and a method of manufacturing the power storage device.
[1] A power storage device comprising: an electrode assembly including a first electrode and a second electrode having a polarity different from a polarity of the first electrode; a case that accommodates the electrode assembly, the case including a case main body provided with a first opening and a first sealing plate that seals the first opening; a first conductive member; a second conductive member connected to the first conductive member; a first electrode terminal electrically connected to the second conductive member and provided on the first sealing plate; and a first insulating member including a base portion and an outer peripheral wall, the base portion being disposed between the second conductive member and the first sealing plate, the outer peripheral wall being formed on an outer peripheral edge of the base portion, the outer peripheral wall rising in a direction intersecting an extending direction of the base portion, wherein a welding portion at which the first conductive member and the second conductive member are welded is formed, the outer peripheral edge of the base portion includes a first portion located in a vicinity of the welding portion and a second portion other than the first portion, and the outer peripheral wall is not formed in the first portion, or a maximum value of a height of the outer peripheral wall in the first portion is lower than a maximum value of a height of the outer peripheral wall in the second portion.
[2] The power storage device according to [1], wherein the first conductive member includes a first plate-shaped portion, and the first plate-shaped portion has a pair of first main surfaces facing each other and a first side end surface connecting the pair of first main surfaces, the second conductive member has a second plate-shaped portion, and the second plate-shaped portion has a pair of second main surfaces facing each other and a second side end surface connecting the pair of second main surfaces, the first conductive member and the second conductive member are disposed such that one of the pair of first main surfaces and one of the pair of second main surfaces are in abutment with each other, and the welding portion is formed at each of the first side end surface and the second side end surface.
[3] The power storage device according to [1] or [2], wherein the first conductive member includes a first region and a second region, and the second conductive member includes a third region and a fourth region, a second insulating member is disposed between the first region and the third region, and the second region and the fourth region are in abutment with each other.
[4] The power storage device according to any one of [1] to [3], wherein the outer peripheral edge of the base portion includes a pair of first end sides facing each other and a pair of second end sides facing each other and each extending in a direction intersecting the first end sides, the outer peripheral wall is provided at each of the pair of first end sides, and the outer peripheral wall is provided at one of the pair of second end sides, and the first portion is included in the other of the pair of second end sides.
[5] The power storage device according to any one of [1] to [4], wherein when viewed in a direction orthogonal to the extending direction of the base portion, the outer peripheral edge of the base portion protrudes with respect to the second conductive member, and a protruding amount (W1) of the outer peripheral edge of the base portion in the first portion is larger than a protruding amount (W2) of the outer peripheral edge of the base portion in the second portion.
[6] A method of manufacturing a power storage device, the power storage device including: an electrode assembly including a first electrode, a second electrode having a polarity different from a polarity of the first electrode, and a first electrode tab electrically connected to the first electrode; a case that accommodates the electrode assembly, the case including a case main body provided with a first opening and a first sealing plate that seals the first opening; a first conductive member electrically connected to the first electrode tab; a second conductive member connected to the first conductive member; a first electrode terminal electrically connected to the second conductive member and provided on the first sealing plate; and a first insulating member including a base portion and an outer peripheral wall, the base portion being disposed between the second conductive member and the first sealing plate, the outer peripheral wall being formed on an outer peripheral edge of the base portion, the outer peripheral wall rising in a direction intersecting an extending direction of the base portion, the method comprising: inserting the electrode assembly into the case main body; and after inserting the electrode assembly into the case main body, joining the first conductive member and the second conductive member, the first conductive member being electrically connected to the first electrode through the first electrode tab, wherein the joining the first conductive member and the second conductive member includes applying an energy ray to at least one of the first conductive member and the second conductive member so as to form a welding portion by welding the first conductive member and the second conductive member, the outer peripheral edge of the base portion includes a first portion located in a vicinity of the welding portion and a second portion other than the first portion, and the outer peripheral wall is not formed in the first portion, or a maximum value of a height of the outer peripheral wall in the first portion is lower than a maximum value of a height of the outer peripheral wall in the second portion.
[7] The method of manufacturing the power storage device according to [6], wherein before joining the first conductive member and the second conductive member, the second conductive member and the first electrode terminal are electrically connected to each other, and the joining the first conductive member and the second conductive member includes welding the first conductive member and the second conductive member by applying an energy ray to at least one of the first conductive member and the second conductive member from between the case main body and the first sealing plate.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to an embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing the secondary battery according to one embodiment.
Fig. 14 is a perspective view showing a state before two electrode assemblies included in the secondary battery according to one embodiment are overlapped with each other.
Fig. 15 is a cross sectional view of each of electrode assemblies and the current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a perspective view showing a state of attaching a sealing plate to the current collector on the positive electrode side.
Fig. 20 is a perspective view showing the configuration of the secondary battery.
Fig. 21 is a perspective view showing a current collection structure on the positive electrode side before the conductive members are joined to each other.
Fig. 22 is a cross sectional view along XXII-XXII in Fig. 21.
Fig. 23 is a cross sectional view showing a joining location after application of an energy ray.
Fig. 24 is a front view of an insulating member.
Fig. 25 is a first perspective view of the insulating member.
Fig. 26 is a second perspective view of the insulating member.
Fig. 27 is a third perspective view of the insulating member.
Fig. 28 is a front view showing a state in which the conductive member is attached to the insulating member.
Fig. 29 is a perspective view showing the state in which the conductive member is attached to the insulating member.
Fig. 30 is a side view showing a state in which the conductive member is attached to the insulating member.
Fig. 31 is an enlarged view showing one end portion of the insulating member.
Fig. 32 is an enlarged view showing the other end portion of the insulating member.
Fig. 33 is a first diagram showing a process of forming a joining portion between conductive members in the positive electrode current collection structure.
Fig. 34 is a second diagram showing the process of forming the joining portion between the conductive members in the positive electrode current collection structure.
Fig. 35 is a third diagram showing the process of forming the joining portion between the conductive members in the positive electrode current collection structure.
Fig. 36 is a fourth diagram showing the process of forming the joining portion between the conductive members in the positive electrode current collection structure.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

In the present specification, when the terms "power storage device", "power storage cell", or "power storage module" is used, the "power storage device", the "power storage cell", or the "power storage module" is not limited to a battery, a battery cell or a battery module, and may include a capacitor, a capacitor cell, or a capacitor module.

The "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

In the present specification, the X direction may be referred to as a "width direction" of each of the secondary battery, the electrode assembly, and the case main body, the Z direction may be referred to as a "height direction" of the secondary battery or the case main body, and the Y direction may be referred to as a "thickness direction" of the secondary battery or the case main body.

### (Overall Configuration of Secondary Battery)

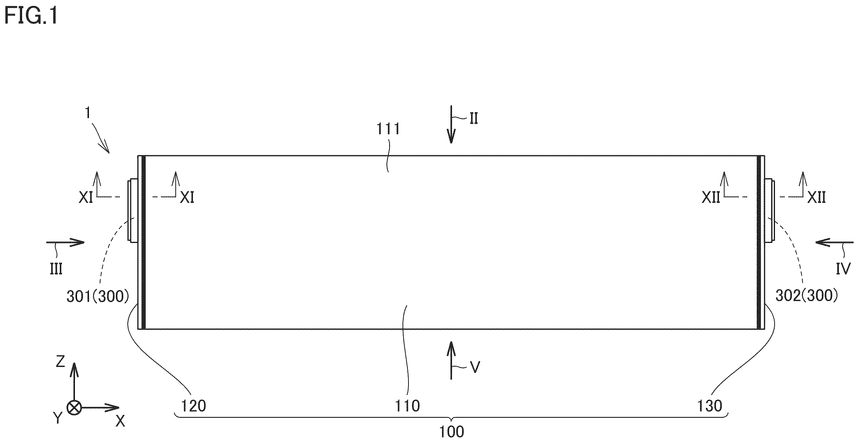

The overall configuration of secondary battery 1 will be described with reference to Figs. 1 to 6. Secondary battery 1 includes a case 100, an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

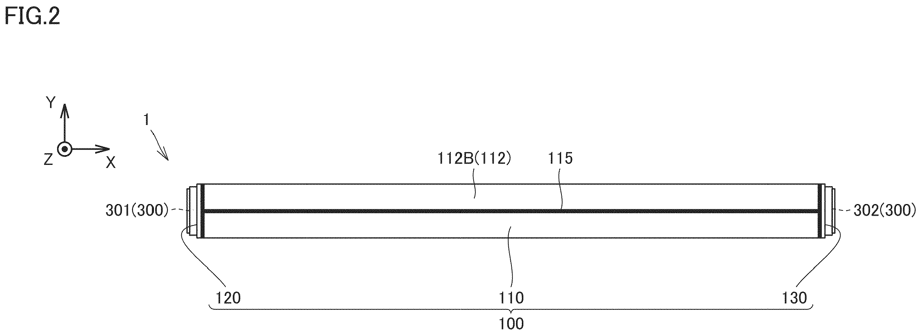

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, energy ray application such as laser welding is favorable). Each of the corners of the "prismatic tubular shape" may have a shape with a curvature. The secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

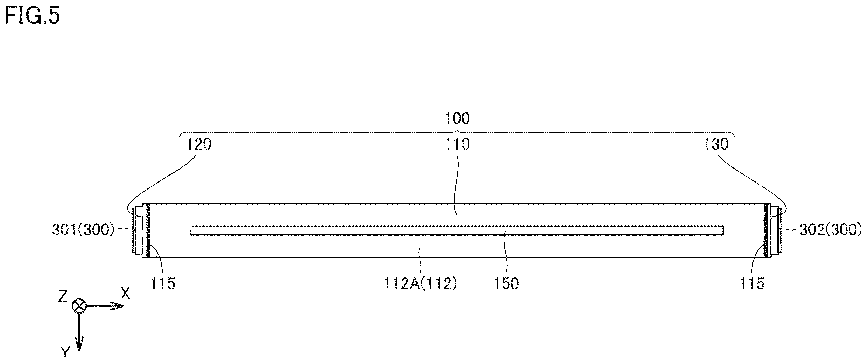

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

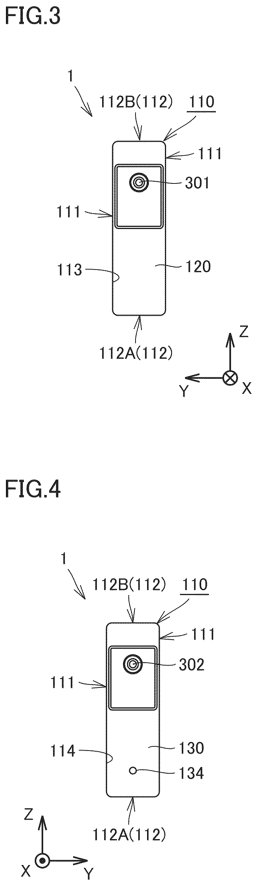

As shown in Fig. 3, an opening 113 (second opening) is provided at an end portion of case main body 110 on one side in the first direction (X direction). Opening 113 is sealed by sealing plate 120 (second sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 (second electrode terminal) is provided on sealing plate 120. The position of negative electrode terminal 301 can be appropriately changed.

As shown in Fig. 4, an opening 114 (first opening) is provided at an end portion of case main body 110 on the other side opposite to the first side in the X direction. That is, opening 114 is located at an end portion opposite to opening 113, and openings 113 and 114 face each other. Opening 114 is sealed by sealing plate 130 (first sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 (first electrode terminal) and an injection hole 134. Injection hole 134 may have a size with which an electrolyte solution can be injected into case 100, and is desirably smaller than a hole used for insertion of positive electrode terminal 302 and provided in sealing plate 130. Injection hole 134 is desirably disposed to be deviated from the center of sealing plate 130 in the Z direction. The positions of positive electrode terminal 302 and injection hole 134 can be appropriately changed.

The implementation of positive electrode terminal 302 provided on sealing plate 130 includes: a case where positive electrode terminal 302 is disposed on sealing plate 130 with an insulating member or the like being interposed therebetween; and a case where positive electrode terminal 302 is disposed directly on sealing plate 130.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode (second electrode) of electrode assembly 200. Negative electrode terminal 301 is attached to sealing plate 120, i.e., case 100.

Positive electrode terminal 302 is electrically connected to a positive electrode (first electrode) of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described negative electrode plate and a below-described positive electrode plate stacked on each other. Specifically, electrode assembly 200 is a stacked type electrode assembly in which a plurality of negative electrode plates and a plurality of positive electrode plates are alternately stacked with a separator being interposed therebetween. The separator may be formed by folding a strip-shaped insulating sheet member in a meandering manner, or may be formed by individually providing a plurality of divided insulating sheets. In the present specification, the "electrode assembly" is not limited to the stacked type electrode assembly, and may be a wound type electrode assembly in which a strip-shaped negative electrode plate and a strip-shaped positive electrode plate are wound together with a strip-shaped separator being interposed therebetween. The separator can be constituted of, for example, a microporous membrane composed of polyolefin. When the electrode assembly is the stacked type electrode assembly including the plurality of negative electrode plates and the plurality of positive electrode plates, negative electrode tabs (second electrode tabs) provided on the negative electrode plates may be stacked to form a negative electrode tab group, and positive electrode tabs (first electrode tabs) provided on the positive electrode plates may be stacked to form a positive electrode tab group.

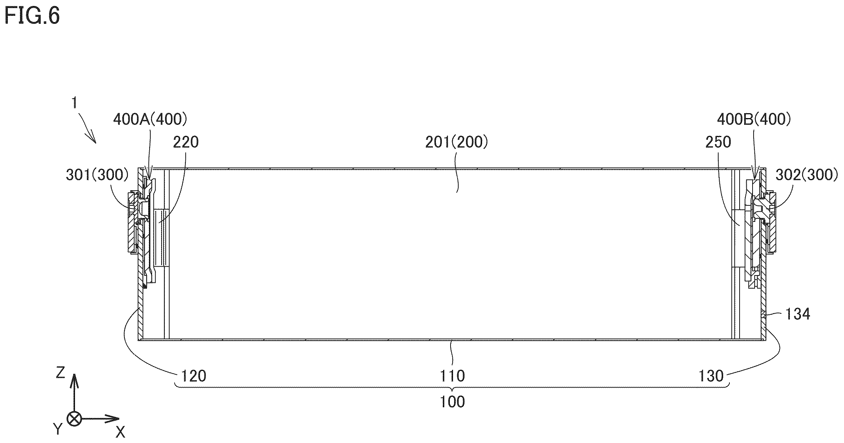

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and the electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

Electrode assembly 200 includes first electrode assembly 201. First electrode assembly 201 includes a main body portion having a substantially rectangular shape, a negative electrode tab group 220, and a positive electrode tab group 250.

The main body portion is constituted of a below-described negative electrode plate 210 and a below-described positive electrode plate 240. Negative electrode tab group 220 is located at an end portion of first electrode assembly 201 on one side (the sealing plate 120 side) with respect to the main body portion thereof in the X direction. Positive electrode tab group 250 is located at an end portion of first electrode assembly 201 on the other side (the sealing plate 130 side) with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

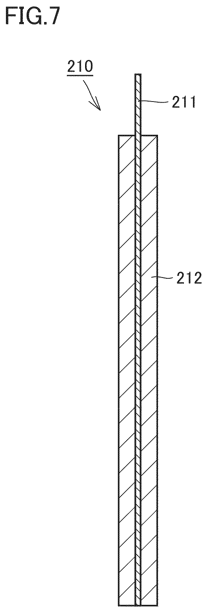

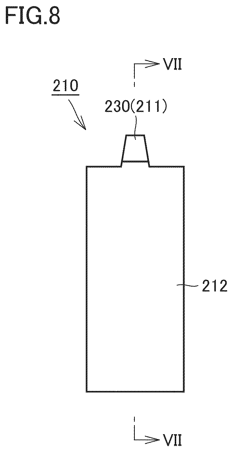

As shown in Figs. 7 and 8, negative electrode plate 210 has a polarity different from a polarity of positive electrode plate 240. A negative electrode tab 230 constituted of a negative electrode core body 211 is provided at one end portion, in the width direction, of negative electrode 210. When negative electrode plates 210 are stacked, a plurality of negative electrode tabs 230 are stacked to form negative electrode tab group 220. The length of each of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 8.

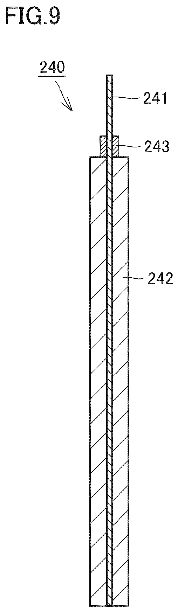

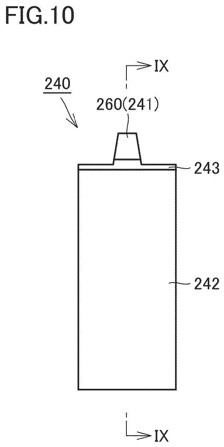

As shown in Figs. 9 and 10, a positive electrode tab 260 constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

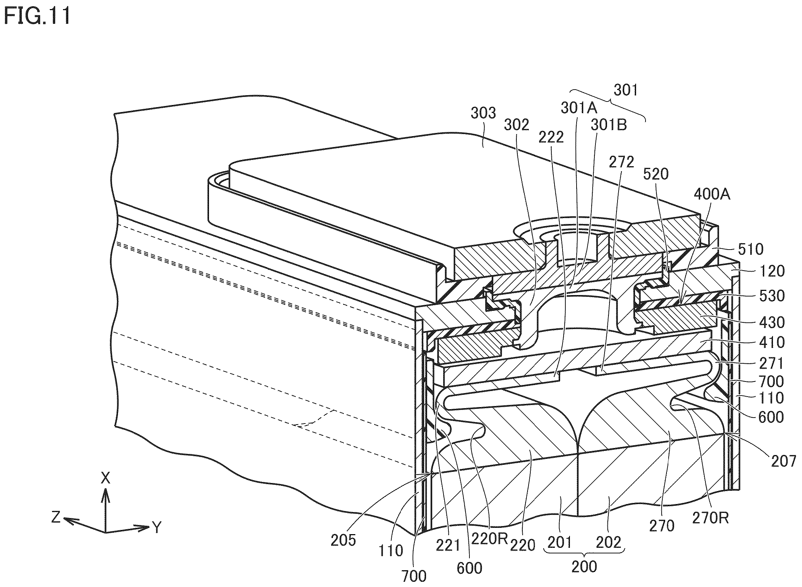

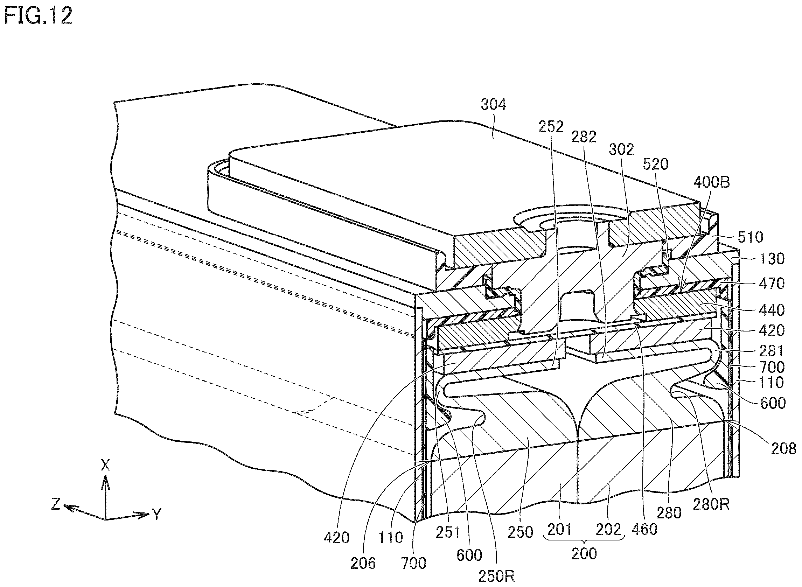

A connection structure between electrode assembly 200 and current collector 400 will be described with reference to Figs. 11 and 12.

As shown in Figs. 11 and 12, electrode assembly 200 includes a first electrode assembly 201 and a second electrode assembly 202. Each of first electrode assembly 201 and second electrode assembly 202 includes a positive electrode and a negative electrode. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

As shown in Fig. 11 (connection structure on the negative electrode side), first electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved. Tip portion 222 is a portion of negative electrode tab group 220 located at its end portion.

Negative electrode tab group 220 is provided with a first recess 220R recessed to the negative electrode tab group 270 side in a curved state. Negative electrode tab group 270 is provided with a second recess 270R recessed to the negative electrode tab group 220 side in a curved state.

Negative electrode tab group 270 has a curved portion 271 and a tip portion 272. Curved portion 271 is a portion at which negative electrode tab group 270 is curved. Tip portion 272 is a portion of negative electrode tab group 270 located at its end portion.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120. Negative electrode current collector 400A includes current collector 410 and a current collector 430.

Current collector 410 is a plate-shaped member. Current collector 410 has a long-side direction in the Z direction and a short-side direction in the Y direction. Current collector 410 is constituted of a single component in one piece. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

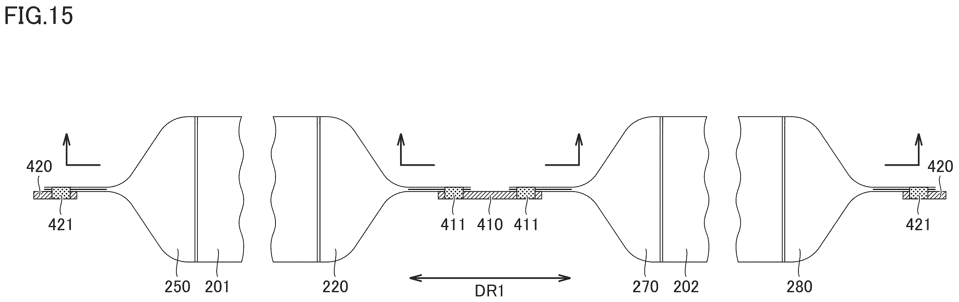

Negative electrode tab groups 220, 270 are joined to current collector 410 at joining locations 411 (see Fig. 15) described later. Each of joining locations 411 can be formed by ultrasonic welding, resistance welding, laser welding, swaging, or the like, for example. In the present embodiment, each of negative electrode tab groups 220, 270 and current collector 410 are joined by, for example, ultrasonic joining.

Current collector 430 is joined to current collector 410 at a joining location located at its end portion in the Z direction. Current collector 430 is connected to negative electrode terminal 301. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303. Negative electrode terminal 301 preferably includes a region 301A composed of copper or a copper alloy and a region 301B composed of aluminum or an aluminum alloy, and region 301A composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Sealing plate 120 may function as negative electrode terminal 301.

A spacer 600 is disposed between sealing plate 120 and the main body portion (negative electrode tab groups 220, 270 are not included) of electrode assembly 200. Spacer 600 is composed of a resin member having an insulating property. Spacer 600 suppresses movement of electrode assembly 200 in case 100 in the X direction to suppress damages of negative electrode tab group 220, negative electrode tab group 270, electrode assembly 200, and the like. Projections provided in spacer 600 are disposed in first recess 220R and second recess 270R.

As shown in Fig. 12 (connection structure on the positive electrode side), the connection structure between electrode assembly 200 and current collector 400 on the positive electrode side is different from that of the configuration on the negative electrode side in the following point: a portion corresponding to current collector 410 on the negative electrode side is constituted of two components.

First electrode assembly 201 includes positive electrode tab group 250. Positive electrode tab group 250 is electrically connected to current collector 420 (positive electrode current collector) at its second end portion 206 in the X direction. Second electrode assembly 202 includes a positive electrode tab group 280. Positive electrode tab group 280 is electrically connected to current collector 420 at its fourth end portion 208 in the X direction.

Positive electrode tab group 250 has a curved portion 251 and a tip portion 252. Curved portion 251 is a portion at which positive electrode tab group 250 is curved. Tip portion 252 is a portion of positive electrode tab group 250 located at its end portion.

Positive electrode tab group 250 is provided with a first recess 250R recessed to the positive electrode tab group 280 side in a curved state. Positive electrode tab group 280 is provided with a second recess 280R recessed to the positive electrode tab group 250 side in a curved state. Projections provided in spacer 600 are disposed in first recess 250R and second recess 280R.

Positive electrode tab group 280 has a curved portion 281 and a tip portion 282. Curved portion 281 is a portion at which positive electrode tab group 280 is curved. Tip portion 282 is a portion of positive electrode tab group 280 located at its end portion.

Positive electrode tab group 250 and positive electrode tab group 280 are curved in opposite directions such that tip portions 252, 282 are close to each other. Tip portions 252, 282 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 and a current collector 440. Although an insulating member 460 is interposed between current collector 420 and current collector 440, current collector 420 and current collector 440 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of one current collector and the other current collector. That is, current collector 420 is constituted of two components.

Positive electrode tab group 250 and positive electrode tab group 280 are joined, at below-described joining locations 421 (see Fig. 15), to current collector 420 constituted of the two components. Each of joining locations 421 can be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 440 is joined to current collector 420 at a joining location located at its end portion in the Z direction. Current collector 440 is connected to positive electrode terminal 302. The connection between current collector 440 and positive electrode terminal 302 can be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Sealing plate 130 may function as positive electrode terminal 302.

A spacer 600 is disposed between sealing plate 130 and the main body portion (positive electrode tab groups 250, 280 are not included) of electrode assembly 200. Spacer 600 is composed of a resin member having an insulating property. Spacer 600 suppresses movement of electrode assembly 200 in case 100 in the X direction to suppress damages of positive electrode tab groups 250, 280, electrode assembly 200, and the like.

Spacer 600 shown in each of Figs. 11 and 12 is composed of a resin, for example. Examples of the material of spacer 600 includes polypropylene (PP), polyphenylene sulfide (PPS), polybutylene terephthalate (PBT), ethylene-propylene-diene rubber (EPDM), and the like.

As shown in Figs. 11 and 12, insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

### (Manufacturing Process for Secondary Battery 1)

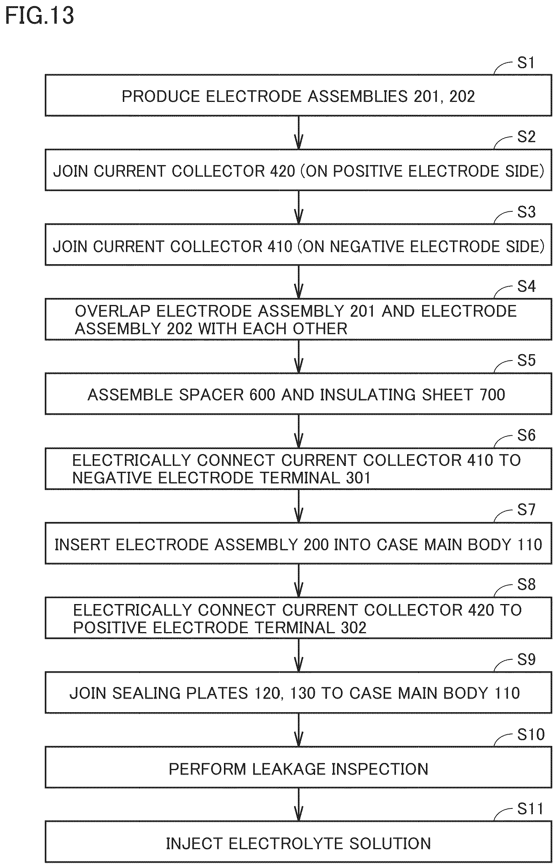

Hereinafter, a method of manufacturing the secondary battery according to the present embodiment will be described with reference to the flowchart of Fig. 13. In the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

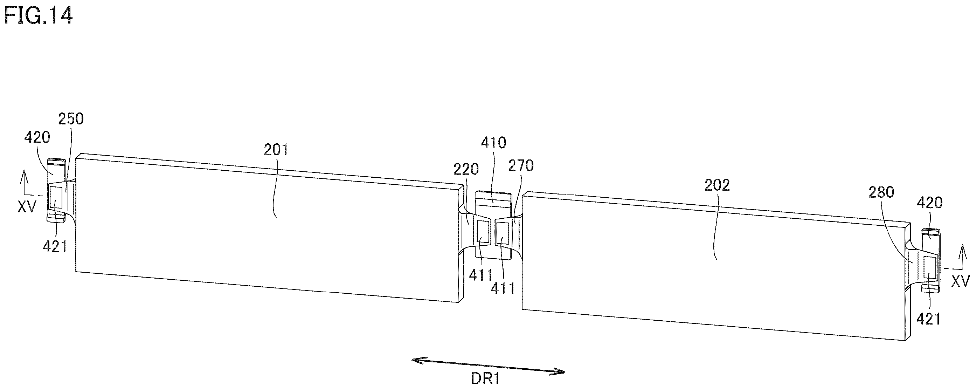

As shown in Figs. 14 and 15, after producing first electrode assembly 201 and second electrode assembly 202, each of positive electrode tab groups 250, 280 is joined to current collector 420 (step S2). Each of positive electrode tab group 250, 280 is joined to current collector 420 at joining location 421.

Next, first electrode assembly 201, current collector 410, and second electrode assembly 202 are disposed side by side in this order in a DR1 direction. Negative electrode tab group 220 is disposed on one side with respect to current collector 410 in the DR1 direction. Negative electrode tab group 220 and negative electrode tab group 270 are joined to current collector 410 with negative electrode tab group 270 being disposed on the other side with respect to current collector 410 in the DR1 direction (step S3). Negative electrode tab group 220 and negative electrode tab group 270 are joined to current collector 410 at joining locations 411.

In the height direction of each of first electrode assembly 201 and second electrode assembly 202, each of current collector 410 and current collector 420 is disposed on one side with respect to the center of each of first electrode assembly 201 and second electrode assembly 202. Thus, each of the current collectors can be formed to be short, thereby reducing the size of the current collector. Each of current collector 410 and current collector 420 is not limited to this configuration. In the height direction of each of first electrode assembly 201 and second electrode assembly 202, each of current collector 410 and current collector 420 may be disposed at the center of a corresponding one of first electrode assembly 201 and second electrode assembly 202.

The order of the steps of joining current collector 410 and current collector 420 to first electrode assembly 201 and second electrode assembly 202 is not limited to the one described above, and the order may be changed. The step of joining current collector 420 to each of first electrode assembly 201 and second electrode assembly 202 is preferably performed before the below-described step of overlapping first electrode assembly 201 and second electrode assembly 202 with each other, and is preferably performed before the step of joining current collector 410 to first electrode assembly 201 and second electrode assembly 202.

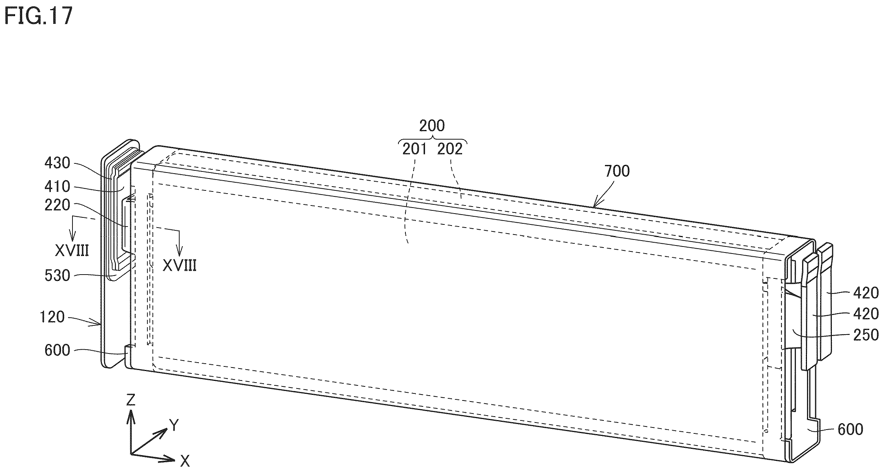

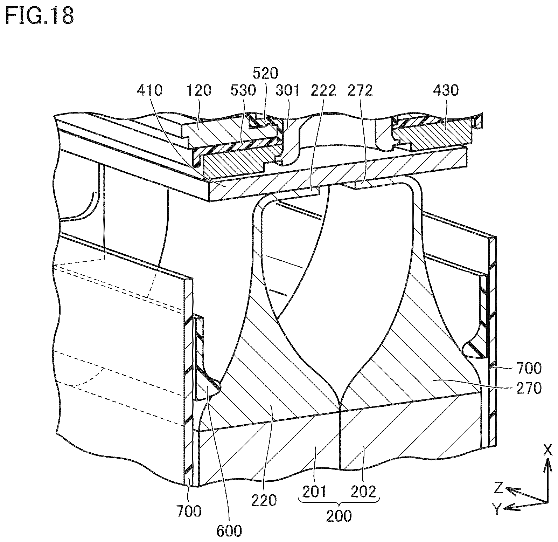

Next, after joining negative electrode tab group 220 and negative electrode tab group 270 to current collector 410, negative electrode tab group 220 and negative electrode tab group 270 are bent in the thickness direction (direction orthogonal to the DR1 direction in Figs. 17 and 18) of each of first electrode assembly 201 and second electrode assembly 202, thereby overlapping first electrode assembly 201 and second electrode assembly 202 with each other (step S4). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. The first electrode assembly and the second electrode assembly may or may not be fixed by a tape or the like. Further, the first electrode assembly, the current collector, and the second electrode assembly may not be disposed on a straight line in the DR1 direction, and the first electrode assembly or the second electrode assembly may be inclined with respect to the current collector in the DR1 direction.

Negative electrode tab group 220 and negative electrode tab group 270 are folded such that the tip portions thereof face each other. Positive electrode tab group 250 and positive electrode tab group 280 are also folded such that the tip portions thereof face each other.

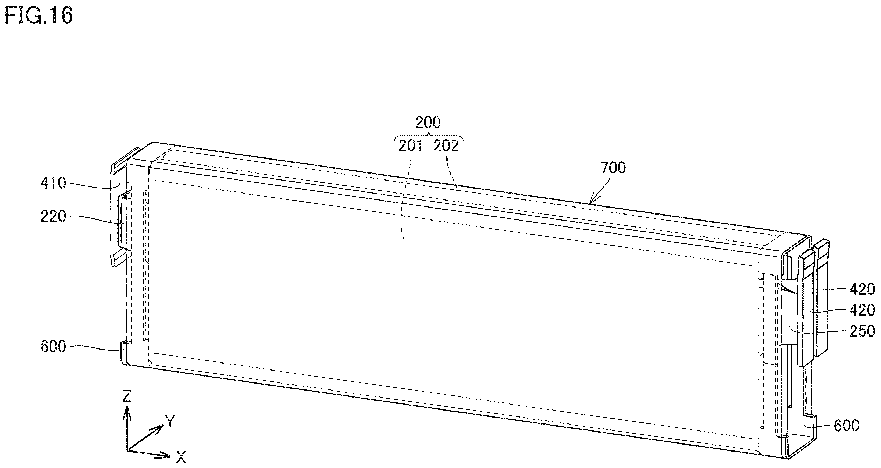

Next, as shown in Fig. 16, spacers 600 and insulating sheet 700 are assembled to electrode assembly 200 (step S5). After spacers 600 are assembled to electrode assembly 200 on the negative electrode side and the positive electrode side, electrode assembly 200 and spacers 600 on the both sides are covered with insulating sheet 700. Thus, electrode assembly 200 and spacers 600 on the both sides are covered with insulating sheet 700 with spacers 600 being disposed on the both sides with respect to electrode assembly 200. Insulating sheet 700 is fixed to spacers 600 on the both sides.

Next, as shown in Figs. 17 and 18, current collector 410 is electrically connected to negative electrode terminal 301 with current collector 430 being interposed therebetween (step S6). Step S6 can be performed before step S5. Specifically, as shown in Fig. 18, negative electrode tab group 220 and negative electrode tab group 270 are folded such that tip portions 222, 272 face each other.

Each of negative electrode terminal 301 and current collector 430 is attached to sealing plate 120 with an insulating member being interposed therebetween. Current collector 430 is brought into abutment with current collector 410 in the X direction. The connecting of plate-shaped member 303 to negative electrode terminal 301 may be performed at any timing. Current collector 430 and current collector 410 are joined to each other by laser welding from between sealing plate 120 and insulating sheet 700.

Next, spacer 600 and electrode assembly 200 are inserted into case main body 110 via opening 113 with the current collector 420 side being inserted first (step S7). Negative electrode tab group 220 and negative electrode tab group 270 are curved by bringing sealing plate 120 close to the main body portion of electrode assembly 200 (first electrode assembly 201 and second electrode assembly 202) from the state in which negative electrode tab group 220 and negative electrode tab group 270 are extended (state shown in Fig. 11). Negative electrode tab group 220 and negative electrode tab group 270 are curved along the shape of spacer 600 such that the folded portions of curved portions 221, 271 are close to case main body 110 in the Y direction.

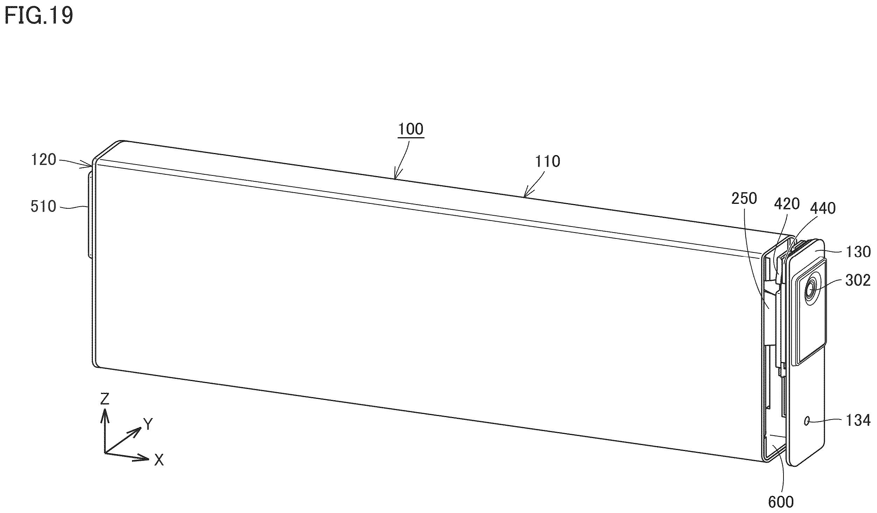

As shown in Fig. 19, after bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from the current collector 410 side. When electrode assembly 200 is pushed from the current collector 410 side, negative electrode tab group 220 and negative electrode tab group 270 can be curved at the same time.

After electrode assembly 200 is inserted into case main body 110, current collector 420 is electrically connected to positive electrode terminal 302 (step S8). Specifically, positive electrode terminal 302 is attached to sealing plate 130 with an insulating member being interposed therebetween. After inserting first electrode assembly 201 and second electrode assembly 202 into case main body 110, current collector 440 is brought into abutment, in the X direction, with current collector 420 protruding from opening 114. The connecting of plate-shaped member 304 to positive electrode terminal 302 may be performed at any timing.

Positive electrode tab group 250 and positive electrode tab group 280 connected to current collector 420 are folded such that tip portions 252, 282 face each other. As shown in Fig. 12, positive electrode tab group 250 and positive electrode tab group 280 are curved along the shape of spacer 600 such that the folded portions of curved portions 251, 281 are close to case main body 110 in the Y direction.

After spacer 600 and electrode assembly 200 are inserted into case main body 110, sealing plate 130 and sealing plate 120 are joined to case main body 110 (step S9).

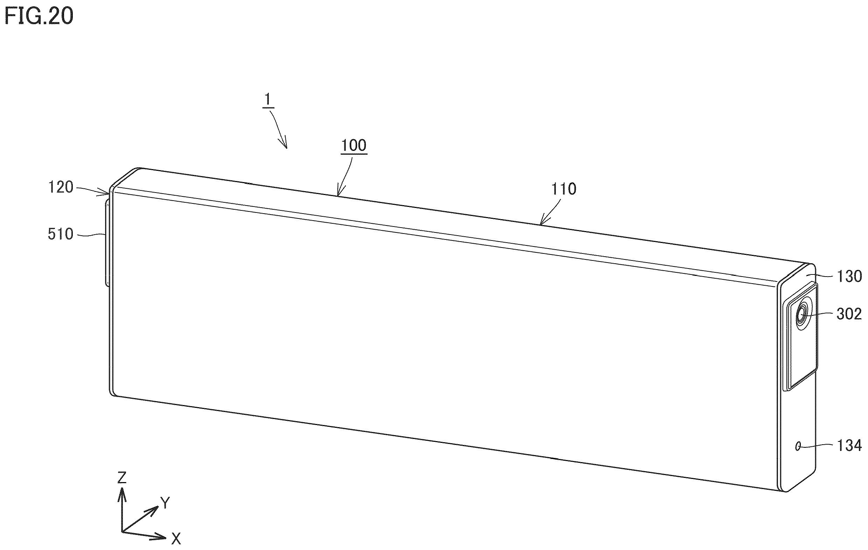

As shown in Fig. 20, after sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

Next, sealing plate 120 and sealing plate 130 are joined to case main body 110. Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S10). After the leakage inspection, secondary battery 1 is dried to remove moisture in case 100.

Next, the electrolyte solution is injected into case 100 via injection hole 134 provided in sealing plate 130 in a state in which sealing plate 130 is disposed on the upper side with respect to sealing plate 120 and spacer 600 is disposed on the lower side with respect to electrode assembly 200 in the vertical direction (step S11). Since spacer 600 is provided around the portion via which the electrolyte solution is injected, electrode assembly 200 or the like is suppressed from being damaged even when the electrolyte solution is vigorously injected into case 100. Thus, in secondary battery 1 according to the present embodiment, the electrolyte solution can be injected in a shorter period of time than that in a case where spacer 600 is not provided. Thereafter, charging is performed to result in release of gas. For performing the charging to result in release of gas, injection hole 134 may be temporarily sealed. Thereafter, injection hole 134 is sealed, thereby completing secondary battery 1.

### (Current Collection Structure on Positive Electrode Side)

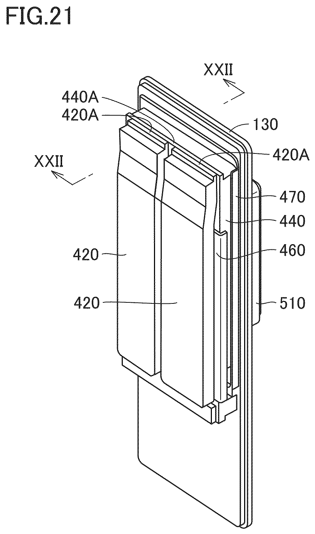

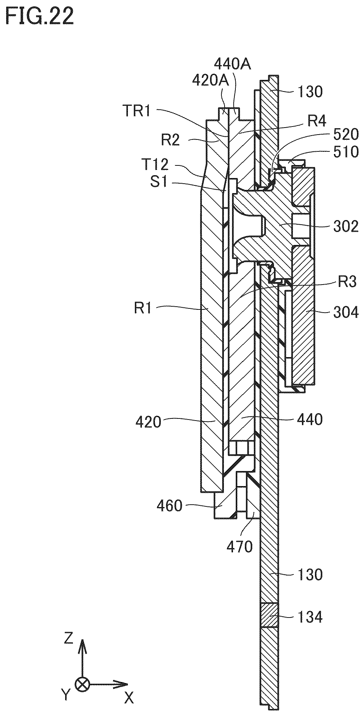

As shown in Figs. 21 and 22, each of current collectors 420, 440 is a plate-shaped member having a long-side direction in the Z axis direction and a short-side direction in the Y axis direction. Aluminum or an aluminum alloy is preferably used for each of current collectors 420, 440.

Current collector 420 (first conductive member) has a first region R1 and a second region R2. Current collector 440 (second conductive member) has a third region R3 and a fourth region R4. An insulating member 460 is disposed between first region R1 of current collector 420 and third region R3 of current collector 440. An insulating member 470 is disposed between sealing plate 130 and current collector 440.

In the direction (X direction) perpendicular to sealing plate 130, a surface of second region R2 of current collector 420 on the sealing plate 130 side is provided to be located on the sealing plate 130 side with respect to a surface of first region R1 on the sealing plate 130 side. Current collector 420 can be formed by bending.

An abutment portion TR1 in which second region R2 and fourth region R4 are in abutment with each other is provided between second region R2 of current collector 420 and fourth region R4 of current collector 440. Current collector 420 and current collector 440 are joined to each other at the upper end portion of abutment portion TR1.

As shown in Figs. 21 and 22, before joining current collector 420 and current collector 440 to each other, current collectors 420, 440 respectively have a projection 420A (first projection) and a projection 440A (second projection) at the upper end portion of abutment portion TR1. In the example of Figs. 21 and 22, projections 420A, 440A are in abutment with each other. However, a clearance may be provided between projections 420A, 440A. Alternatively, only one of projections 420A, 440A may be provided.

Current collectors 420, 440 are joined to each other by applying energy rays to projections 420A, 440A. Preferably, current collectors 420, 440 are joined to each other by welding. More preferably, current collectors 420, 440 are joined by laser welding.

At the portions to which the energy rays are applied, the heights of projections 420A, 440A are reduced. Although projections 420A, 440A substantially cease to exist at the portions to which the energy rays are applied; however, projections 420A, 440A may not necessarily completely cease to exist at the portions to which the energy rays are applied.

After electrode assembly 200 is inserted into case main body 110, in the step of joining current collector 420 and current collector 440 to each other, the above-described energy rays (preferably, laser light) are applied to at least one of projection 420A of current collector 420 and projection 440A of current collector 440 from between case main body 110 and sealing plate 130. Thus, a joining portion between current collectors 420, 440 is formed. It should be noted that current collector 420 and current collector 440 may be joined to each other before electrode assembly 200 is inserted into case main body 110.

Current collector 420 has an inclined portion T12 (stepped portion) between first region R1 and second region R2, and a clearance S1 is provided between inclined portion T12 and current collector 440. Clearance S1 is gradually decreased toward second region R2. Further, clearance S1 has a region in which insulating member 460 is not disposed. By providing clearance S1, it is possible to suppress heat generated when forming the joining portion between current collectors 420, 440 from being conducted to the first region R1 side and the third region R3 side, with the result that the joining portion between current collectors 420, 440 can be stably formed and the heat conducted to positive electrode tab groups 250, 280, electrode assembly 200, and other conductive members can be reduced.

Second region R2 (first plate-shaped portion) of current collector 420 has a pair of main surfaces (first main surfaces) facing each other, and projection 420A is formed in an upper end surface (first side end surface) connecting the pair of main surfaces. Fourth region R4 (second plate-shaped portion) of current collector 440 has a pair of main surfaces (second main surfaces) facing each other, and projection 440A is formed in an upper end surface (second side end surface) connecting the pair of main surfaces.

As in the examples of Figs. 21 and 22, by performing the joining by applying the energy rays to projections 420A, 440A provided at the upper end portions of current collectors 420, 440, heat generated by the application of the energy rays is concentrated in the vicinity of each of projections 420A, 440A, thereby attaining the joining efficiently with high reliability (and with smaller energy). However, in secondary battery 1 according to the present embodiment, the implementation of the joining portion between current collectors 420, 440 is not particularly limited.

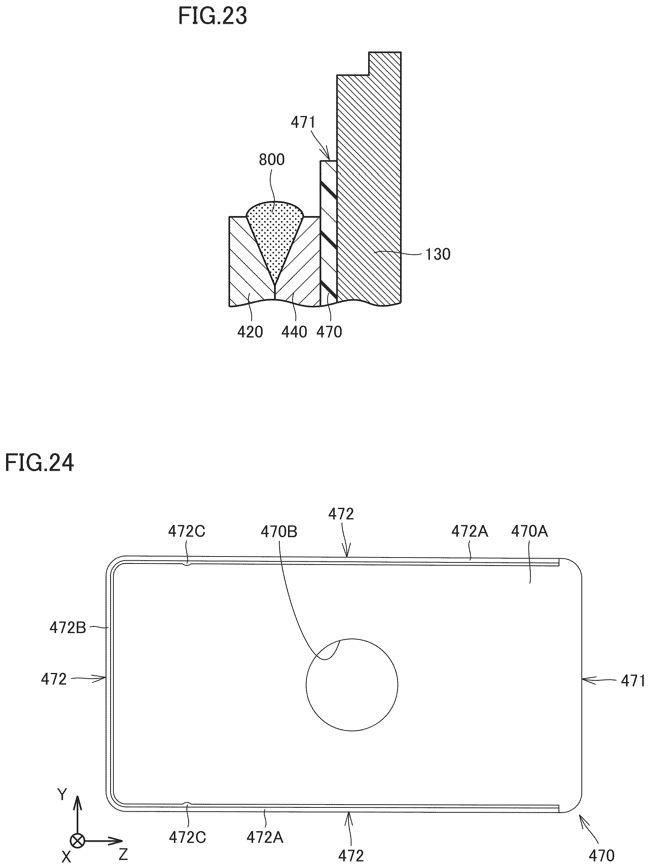

As shown in Fig. 23, a joining portion 800 (welding portion) for joining current collectors 420, 440 is formed. Joining portion 800 is formed at the end portion of each of current collectors 420, 440 on the +Z side, but the position at which joining portion 800 is formed is not limited thereto. As shown in Fig. 23, the center (deepest portion) of joining portion 800 preferably coincides with a boundary (abutment portion TR1) between current collectors 420, 440. However, the center of joining portion 800 may be slightly deviated to the current collector 420 side (-X side) or the current collector 440 side (+X side) from the state shown in Fig. 23.

### (Insulating Member 470)

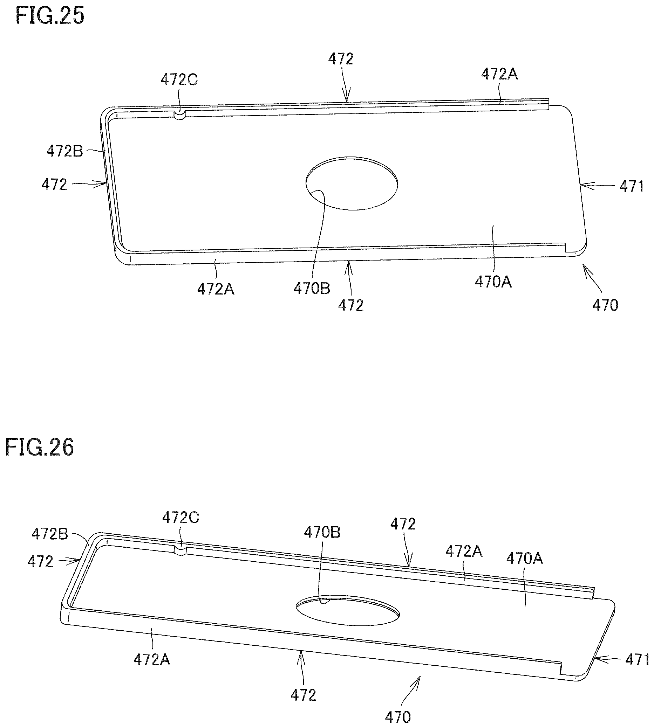

As shown in Figs. 24 to 27, insulating member 470 (first insulating member) includes a base portion 470A and is provided with a through hole 470B. Base portion 470A is formed to have a plate shape and is disposed along sealing plate 130. Therefore, base portion 470A extends along the Y-Z plane in a state in which insulating member 470 is attached to sealing plate 130. Base portion 470A is disposed between current collector 440 and sealing plate 130. Positive electrode terminal 302 is inserted into through hole 470B.

Base portion 470A has a substantially rectangular shape including a pair of long sides (first end sides) and a pair of short sides (second end sides). Here, the "substantially rectangular shape" includes: a shape in which a corner portion has a shape with a curvature; and a shape in which a notch is formed in a part of the rectangle. The outer peripheral edge of base portion 470A includes a first portion 471 (a short side on the +Z side) and a second portion 472 (a short side on the -Z side and a pair of long sides). However, the "substantially rectangular shape" is not necessarily limited to a shape having long sides and short sides, and includes a "substantially square shape". Further, the shape of the base portion is not limited to the "substantially rectangular shape".

No outer peripheral wall is formed in first portion 471 of first portion 471 and second portion 472, and outer peripheral walls 472A, 472B are formed in at least a part of second portion 472. Outer peripheral walls 472A, 472B are provided so as to rise from base portion 470A toward electrode assembly 200 in a state in which insulating member 470 is attached to sealing plate 130. First portion 471 is disposed on the side on which joining portion 800 between current collectors 420, 440 is formed (on the +Z side in the present embodiment).

The pair of outer peripheral walls 472A (first walls) are provided on the pair of long sides of base portion 470A, and outer peripheral wall 472B (second wall) is provided on the short side of base portion 470A on the -Z side. However, the pair of outer peripheral walls 472A may be provided on the short sides of base portion 470A, and outer peripheral wall 472B may be provided on the long side of base portion 470A, depending on a location at which the joining portion is formed.

Each of outer peripheral walls 472A extends in the Z direction (the height direction of secondary battery 1) in a state in which insulating member 470 is attached to sealing plate 130. Outer peripheral wall 472B extends in the Y direction (the thickness direction of secondary battery 1) in the state in which insulating member 470 is attached to sealing plate 130.

As shown in Figs. 24 to 27, outer peripheral walls 472A, 472B are preferably provided continuously so as to extend substantially across the whole of each of the three sides of the substantially rectangular shape. However, each of outer peripheral walls 472A may be provided only in a limited range shorter than that illustrated in each of Figs. 24 to 27 on the -Z side. Further, parts of outer peripheral walls 472A, 472B may be intermittently provided.

In the example of the present embodiment, joining portion 800 between current collector 420 and current collector 440 is formed across substantially the whole of upper side of current collector 440 in the Y direction. Therefore, in insulating member 470 illustrated here, first portion 471 (the portion at which outer peripheral walls 472A, 472B are not formed) covers the whole of the short side on the +Z side in the substantially rectangular shape in the state in which insulating member 470 is attached to sealing plate 130.

However, first portion 471 may be provided in the formation region of joining portion 800 and a region adjacent thereto (these regions are collectively referred to as "vicinity" of joining portion 800 in the present specification) when viewed from the +Z side (the side on which joining portion 800 is formed), and the arrangement of first portion 471 may also be changed in accordance with the formation region of joining portion 800. For example, outer peripheral walls 472A, 472B may be provided on a part of the short side (upper side) of base portion 470A on the +Z side. On this occasion, the portion at which outer peripheral walls 472A, 472B are provided becomes second portion 472. It should be noted that the above-described "adjacent region" means a region of a predetermined distance (at least about 1 mm or less, more preferably at least about 3 mm or less, and further preferably about 5 mm or less) from the edge end of joining portion 800 when viewed from the +Z side (side on which joining portion 800 is formed).

For example, in the case where base portion 470A of insulating member 470 has a rectangular shape including four end sides, first portion 471 may be provided on the end side closest to joining portion 800 among the four end sides as one preferable embodiment. In this case, second portion 472 can be provided on the three end sides of the four end sides except for the end side on which first portion 471 is provided.

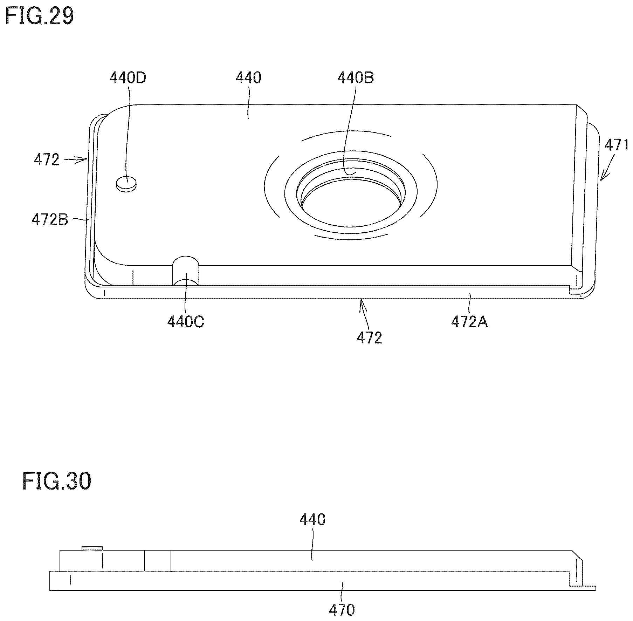

Preferably, first portion 471 is disposed across two or more sides of the substantially rectangular shape in accordance with the formation region of joining portion 800, for example. For example, as shown in Figs. 24 to 30, first portion 471 is preferably also provided at each of two corner portions, which are located at both ends of the short side (second end side) on the +Z side on which first portion 471 is provided, of the outer peripheral edge of base portion 470A. Moreover, first portion 471 is also preferably provided at an end portion of each of the pair of long sides (first end sides) connected to the two corner portions, at each of which first portion 471 is provided, of the outer peripheral edge of base portion 470A. In the long side (first end side), first portion 471 is preferably provided so as to be connected to the vicinity of the corner portion at which first portion 471 is provided. It should be noted that in the second end side (long side), the length of the region at which first portion 471 is provided is preferably about 0.5 mm or more, and more preferably about 1 mm or more. Moreover, the length of the region is preferably about 10 mm or less, and more preferably about 5 mm or less.

A projection 472C (fitting projection) is formed on outer peripheral wall 472A. Projection 472C is formed to protrude inward from outer peripheral wall 472A. Projection 472C may contribute to positioning of current collector 440 attached to insulating member 470. However, projection 472C may not necessarily be provided.

An outer peripheral wall (not shown) having a height lower than that of each of outer peripheral walls 472A, 472B of second portion 472 may be formed in a part or whole of first portion 471 (upper side of base portion 470A). When the outer peripheral wall having the height lower than that of each of outer peripheral walls 472A, 472B of second portion 472 is provided in first portion 471, the maximum value of the height of the outer peripheral wall provided in first portion 471 is preferably about 1/2 or less (more preferably, about 1/3 or less, and further preferably about 1/10 or less) of the maximum value of the height of each of outer peripheral walls 472A, 472B. It should be noted that the average value of the heights of the outer peripheral walls oriented also toward first portion 471 is preferably lower than the average value of the heights of outer peripheral walls 472A, 472B of second portion 472.

Thus, by employing the structure of insulating member 470 in which the outer peripheral wall is not provided (or its height is relatively low) in first portion 471 located in the vicinity of joining portion 800, damage of insulating member 470 due to heat or the like when forming joining portion 800 can be suppressed, thereby improving the reliability of securing the insulating property by insulating member 470.

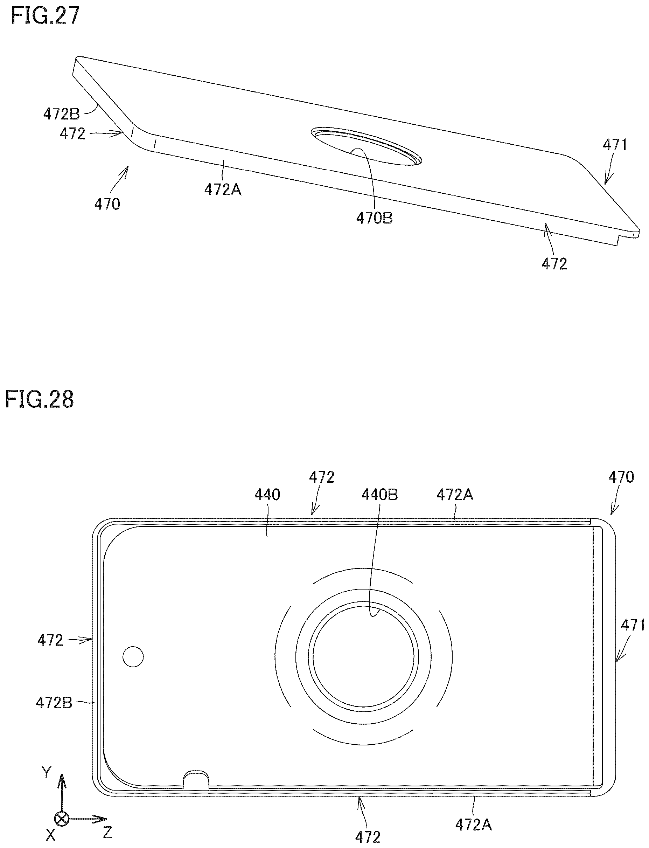

As shown in Figs. 28 to 30, current collector 440 is provided with a through hole 440B, and includes a notch 440C (fitting recess) and a protrusion 440D. As shown in Fig. 28, when viewed in the direction (X direction) orthogonal to the extending direction (Y-Z plane direction) of base portion 470A of insulating member 470, the outer peripheral edge of base portion 470A protrudes from current collector 440. The outer peripheral edge of base portion 470A of insulating member 470 preferably protrudes relatively larger in first portion 471 than in second portion 472.

Through hole 440B of current collector 440 communicates with through hole 470B of insulating member 470. Positive electrode terminal 302 is inserted into through hole 440B. Notch 440C of current collector 440 is fitted with projection 472C of insulating member 470, and can contribute to positioning between current collector 440 and insulating member 470. However, notch 440C may not necessarily be provided. Protrusion 440D of current collector 440 may be fitted into a recess or hole (not shown) formed in insulating member 460 (second insulating member) disposed between current collectors 420, 440, and may contribute to positioning between current collector 440 and insulating member 460.

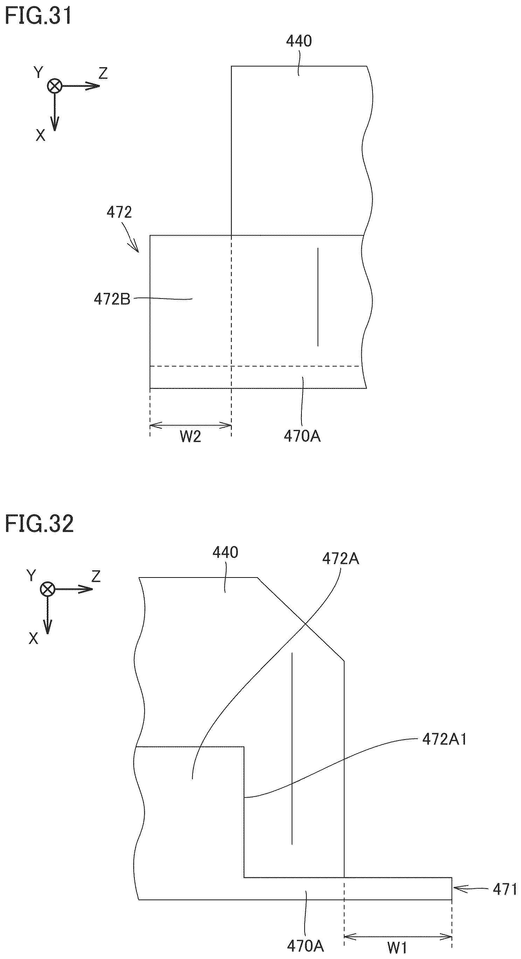

As shown in Figs. 31 and 32, when the short side (Fig. 31) of base portion 470A on one side (-Z side) and the short side (Fig. 32) thereof on the other side (Z side) are compared, a protruding amount (W1: the extending amount of base portion 470A) of the outer peripheral edge of base portion 470A in first portion 471 is preferably larger than a protruding amount (W2: the thickness of outer peripheral wall 472B) of the outer peripheral edge of base portion 470A in second portion 472 provided with outer peripheral wall 472B. W1/W2 is more preferably about 1.2 or more, W1/W2 is still more preferably about 1.8 or more, and W1/W2 is further preferably about 3 or more.

Moreover, as shown in Fig. 32, upper end 472A1 (end portion on the +Z side) of outer peripheral wall 472A is located at a position (-Z side) away from first portion 471 with respect to current collector 440.

As described above, by increasing the protruding amount of base portion 470A on the first portion 471 side, a creepage distance of insulating member 470 from sealing plate 130 to current collector 440 can be kept large also in first portion 471 having no outer peripheral wall (or having an outer peripheral wall with a relatively low height), with the result that occurrence of an electrical short circuit between sealing plate 130 and current collector 440 can be suppressed to attain further improved reliability of securing the insulation property by insulating member 470.

Moreover, since upper end 472A1 (end portion on the +Z side) of outer peripheral wall 472A is located on the lower side (-Z side) with respect to current collector 440, outer peripheral wall 472A can be suppressed from being damaged when forming joining portion 800, thereby further improving the reliability of securing the insulating property by insulating member 470.

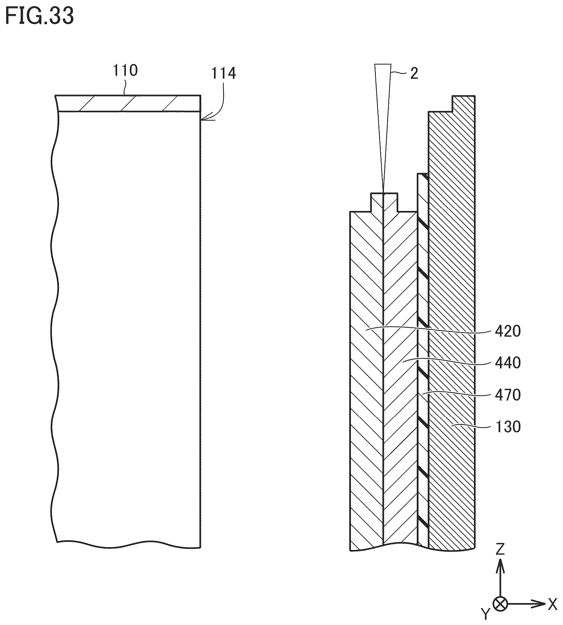

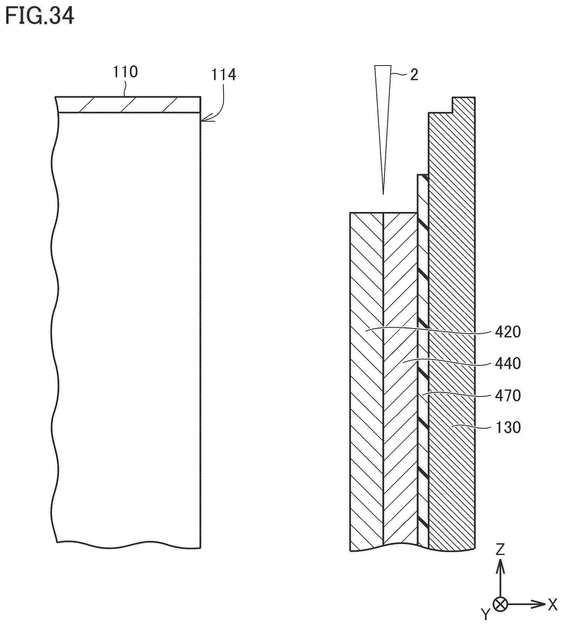

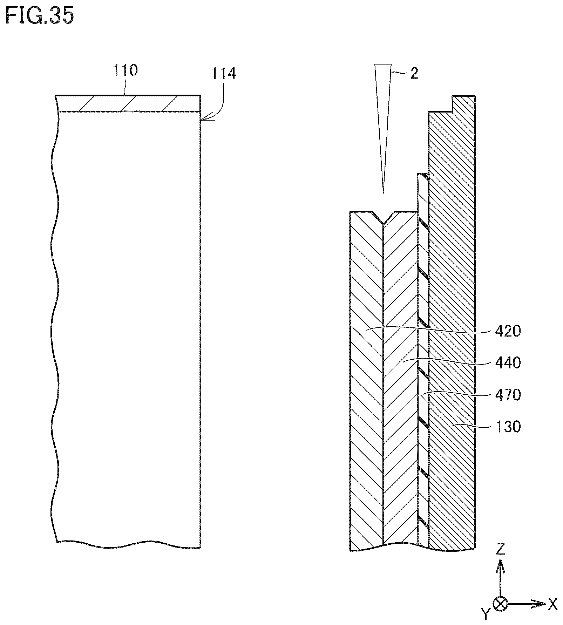

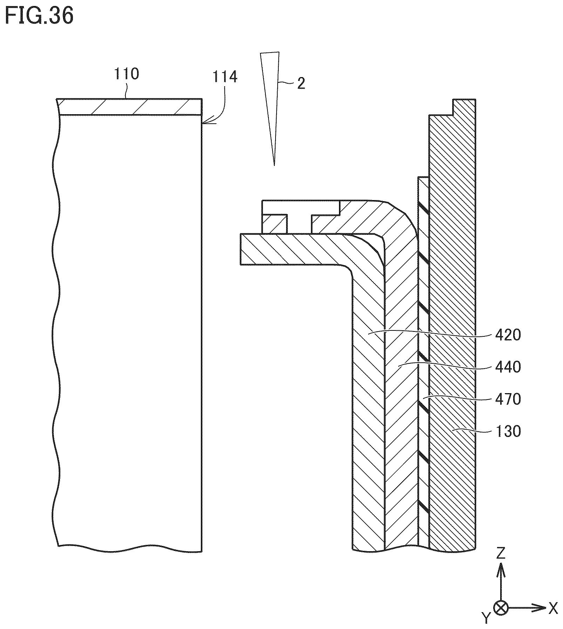

In secondary battery 1 according to the present embodiment, the shapes of current collectors 420, 440 included in the current collection structure on the positive electrode side are not particularly limited. For example, as shown in Fig. 33, joining portion 800 (welding portion) may be formed by applying laser light 2 (energy rays) to the projections formed in current collectors 420, 440, or as shown in Figs. 34 and 35, joining portion 800 may be formed by applying laser light 2 to the boundary portion between current collectors 420, 440 each having no projections. Moreover, as shown in Fig. 36, joining portion 800 may be formed by applying laser light 2 to a portion which is formed in the form of a substantially L shape and at which current collectors 420, 440 are overlapped with each other.

In secondary battery 1 according to the present embodiment, joining portion 800 (welding portion) in which current collector 420 (first conductive member) and current collector 440 (second conductive member) are joined is preferably formed at a position facing the inner surface of second side surface portion 112B of case main body 110. In this way, joining portion 800 can be formed by applying the energy rays to at least one of current collectors 420, 440 from between case main body 110 and sealing plate 130. As a result, it is possible to provide secondary battery 1 having a higher volume density and higher reliability with which insulating members 460, 470 are suppressed from being damaged when forming joining portion 800. Moreover, when each of insulating members 460, 470 is composed of a resin, it is possible to effectively suppress generation of a conductive foreign matter or the like due to carbonization of a part of each of insulating members 460, 470 due to the heat of laser light 2 (energy rays).

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A power storage device comprising:
an electrode assembly (200) including a first electrode (240) and a second electrode (210) having a polarity different from a polarity of the first electrode (240);
a case (100) that accommodates the electrode assembly (200), the case (100) including a case main body (110) provided with a first opening (114) and a first sealing plate (130) that seals the first opening (114);
a first conductive member (420);
a second conductive member (440) connected to the first conductive member (420);
a first electrode terminal (302) electrically connected to the second conductive member (440) and provided on the first sealing plate (130); and
a first insulating member (470) including a base portion (470A) and an outer peripheral wall (472A, 472B), the base portion (470A) being disposed between the second conductive member (440) and the first sealing plate (130), the outer peripheral wall (472A, 472B) being formed on an outer peripheral edge of the base portion (470A), the outer peripheral wall (472A, 472B) rising in a direction intersecting an extending direction of the base portion (470A), wherein
a welding portion (800) at which the first conductive member (420) and the second conductive member (440) are welded is formed,
the outer peripheral edge of the base portion (470A) includes a first portion (471) located in a vicinity of the welding portion (800) and a second portion (472) other than the first portion (471), and
the outer peripheral wall is not formed in the first portion (471), or a maximum value of a height of the outer peripheral wall in the first portion (471) is lower than a maximum value of a height of the outer peripheral wall (472A, 472B) in the second portion (472).

2. The power storage device according to claim 1, wherein
the first conductive member (420) includes a first plate-shaped portion, and the first plate-shaped portion has a pair of first main surfaces facing each other and a first side end surface connecting the pair of first main surfaces,
the second conductive member (440) includes a second plate-shaped portion, and the second plate-shaped portion has a pair of second main surfaces facing each other and a second side end surface connecting the pair of second main surfaces,
the first conductive member (420) and the second conductive member (440) are disposed such that one of the pair of first main surfaces and one of the pair of second main surfaces are in abutment with each other, and
the welding portion (800) is formed at each of the first side end surface and the second side end surface.

3. The power storage device according to claim 1 or 2, wherein
the first conductive member (420) includes a first region (R1) and a second region (R2), and the second conductive member (440) includes a third region (R3) and a fourth region (R4),
a second insulating member (460) is disposed between the first region (R1) and the third region (R3), and
the second region (R2) and the fourth region (R4) are in abutment with each other.

4. The power storage device according to any one of claims 1 to 3, wherein
the outer peripheral edge of the base portion (470A) includes a pair of first end sides facing each other and a pair of second end sides facing each other and each extending in a direction intersecting the first end sides,
the outer peripheral wall (472A) is provided at each of the pair of first end sides, and
the outer peripheral wall (472B) is provided at one of the pair of second end sides, and the first portion (471) is included in the other of the pair of second end sides.

5. The power storage device according to any one of claims 1 to 4, wherein
when viewed in a direction orthogonal to the extending direction of the base portion (470A), the outer peripheral edge of the base portion (470A) protrudes with respect to the second conductive member (440), and
a protruding amount (W1) of the outer peripheral edge of the base portion (470A) in the first portion (471) is larger than a protruding amount (W2) of the outer peripheral edge of the base portion (470A) in the second portion (472).

6. A method of manufacturing a power storage device,
the power storage device including:
an electrode assembly (200) including a first electrode (240), a second electrode (210) having a polarity different from a polarity of the first electrode (240), and a first electrode tab electrically connected to the first electrode (240);
a case (100) that accommodates the electrode assembly (200), the case (100) including a case main body (110) provided with a first opening (114) and a first sealing plate (130) that seals the first opening (114);
a first conductive member (420) electrically connected to the first electrode tab;
a second conductive member (440) connected to the first conductive member (420);
a first electrode terminal (302) electrically connected to the second conductive member (440) and provided on the first sealing plate (130); and
a first insulating member (470) including a base portion (470A) and an outer peripheral wall (472A, 472B), the base portion (470A) being disposed between the second conductive member (440) and the first sealing plate (130), the outer peripheral wall (472A, 472B) being formed on an outer peripheral edge of the base portion (470A), the outer peripheral wall (472A, 472B) rising in a direction intersecting an extending direction of the base portion (470A),
the method comprising:
inserting the electrode assembly (200) into the case main body (110); and
after inserting the electrode assembly (200) into the case main body (110), joining the first conductive member (420) and the second conductive member (440), the first conductive member (420) being electrically connected to the first electrode (240) through the first electrode tab, wherein
the joining the first conductive member (420) and the second conductive member (440) includes applying an energy ray to at least one of the first conductive member (420) and the second conductive member (440) so as to form a welding portion (800) by welding the first conductive member (420) and the second conductive member (440),
the outer peripheral edge of the base portion (470A) includes a first portion (471) located in a vicinity of the welding portion (800) and a second portion (472) other than the first portion (471), and
the outer peripheral wall is not formed in the first portion (471), or a maximum value of a height of the outer peripheral wall in the first portion (471) is lower than a maximum value of a height of the outer peripheral wall (472A, 472B) in the second portion (472).

7. The method of manufacturing the power storage device according to claim 6, wherein
before joining the first conductive member (420) and the second conductive member (440), the second conductive member (440) and the first electrode terminal (302) are electrically connected to each other, and
the joining the first conductive member (420) and the second conductive member (440) includes welding the first conductive member (420) and the second conductive member (440) by applying an energy ray to at least one of the first conductive member (420) and the second conductive member (440) from between the case main body (110) and the first sealing plate (130).
